# EUROPÄISCHE PATENTSCHRIFT

(11) **EP 3 402 634 B1**
(45) Veröffentlichungstag und Bekanntmachung des Hinweises auf die Patenterteilung: **05.10.2022**
(21) Anmeldenummer: 17700349.8
(22) Anmeldetag: 12.01.2017
(51) Int. Cl.: B25J 13/08

(54) **GREIFER MIT EINER KRAFTMESSVORRICHTUNG**
GRIPPER HAVING A FORCE MEASUREMENT DEVICE
DISPOSITIF DE PRÉHENSION COMPRENANT UN DISPOSITIF DE MESURE DE FORCE

(30) Priorität: 15.01.2016 DE 102016200492
(43) Veröffentlichungstag der Anmeldung: 21.11.2018
(73) Patentinhaber: KUKA Deutschland GmbH, 86165 Augsburg (DE)
(72) Erfinder: BRUDNIOK, Sven, 86853 Langerringen (DE)
(74) Vertreter: Tillmann, Axel
(86) Internationale Anmeldenummer: PCT/EP2017/050609
(87) Internationale Veröffentlichungsnummer: WO 2017/121827

(56) Entgegenhaltungen:
- EP-A1- 2 164 685
- DE-A1- 2 628 701
- DE-A1- 2 636 473
- DE-A1- 10 138 684
- DE-A1-102013 107 701
- US-A- 4 579 380

## Beschreibung

Die Erfindung betrifft einen Greifer, aufweisend einen Greifergrundkörper, wenigstens einen ersten Greiferfinger und wenigstens einen zweiten Greiferfinger, sowie ein Getriebe, das ausgebildet ist, den wenigstens einen ersten Greiferfinger und den wenigstens einen zweiten Greiferfinger relativ zueinander verstellbar am Greifergrundkörper zu lagern.

Aus der WO 2008/083995 A1 ist eine Vorrichtung zur Qualitätskontrolle eines rotationssymmetrischen Körpers bekannt, wobei die Vorrichtung ein Handhabungssystem mit einem Greifer zum Greifen des Körpers und zum Transportieren des Körpers in eine Arbeitsposition, sowie mindestens eine elektronische Kamera zum optischen Abtasten des Körpers in der Arbeitsposition aufweist, wobei der Greifer des Handhabungssystems Greiffinger mit rotationssymmetrischen Halteelementen zum Festhalten des Körpers aufweist, wobei die Halteelemente um ihre Rotationsachsen rotierbar ausgebildet sind. Die Halteelemente der Greiffinger des Greifers sind dabei jeweils mit einem Zahnrad drehfest verbunden, wobei die Zahnräder aller Greiffinger des Greifers mittelbar über mindestens ein weiteres Zahnrad mit einem zentralen Zahnrad des Greifers in Eingriff stehen, und der Greifer einen Antriebsmechanismus aufweist, welcher das zentrale Zahnrad in eine Rotationsbewegung versetzt.

Aus der EP 2 660 015 B1 ist ein Greifer zum Manipulieren von, insbesondere röhrchenförmigen, Probengefäßen bekannt, mit einer Greiferbasis, wenigstens zwei je einen Halteabschnitt zum Erfassen eines Probengefäßes aufweisenden, jeweils um eine Fingerrotationsachse relativ zu der Greiferbasis verdrehbar an der Greiferbasis angeordneten Greiferfingern, wobei die Halteabschnitte der Greiferfinger jeweils in Bezug auf die zugeordnete Fingerrotationsachse azentrisch angeordnet sind, und mit einem ersten Antrieb zum Verdrehen der Greiferfinger, wobei die Greiferfinger derart miteinander gekoppelt sind, dass sie von dem Antrieb gleichzeitig und mit jeweils gleicher Rotationsgeschwindigkeit und -richtung angetrieben werden, wobei die Greiferbasis an einem Grundkörper und relativ zu diesem um eine von den Fingerrotationsachsen verschiedene Basisrotationsachse drehbar angeordnet ist, dass ein zweiter Antrieb zum Verdrehen der Greiferbasis relativ zu dem Grundkörper vorgesehen ist und dass eine Steuereinrichtung vorgesehen ist zum Steuern der Antriebe derart, dass durch eine Bewegungskombination aus Verdrehen der Greiferfinger relativ zu der Greiferbasis und Verdrehen der Greiferbasis relativ zu dem Grundkörper für jeden der Halteabschnitte der Greiferfinger jeweils eine im Wesentlichen lineare Bewegung relativ zu dem Grundkörper resultiert.

Die DE 10 2013 107701 A1 beschreibt eine kraftgesteuerte elektrische Hand, wobei ein Kraftsensor die Greifkraft abhängig von dem Umfang einer Verschiebung von parallelen Trägern in einer Richtung einer Achsenlinie erfasst.

Aus der DE 26 28 701 A1 ist eine Fühleranordnung für Manipulatoren bekannt.

Aufgabe der Erfindung ist es, einen Greifer mit einer integrierten Kraftmessvorrichtung zu schaffen, welche Kraftmessvorrichtung Greifkräfte an zwei gegenüberliegenden Greifflächen eines Greiferfingers messen kann.

Diese Aufgabe wird erfindungsgemäß gelöst durch einen Greifer, aufweisend einen Greifergrundkörper, wenigstens einen ersten Greiferfinger und wenigstens einen zweiten Greiferfinger, sowie ein Getriebe, das ausgebildet ist, den wenigstens einen ersten Greiferfinger und den wenigstens einen zweiten Greiferfinger relativ zueinander verstellbar am Greifergrundkörper zu lagern, wobei mindestens einer der ersten und zweiten Greiferfinger aufweist:
- einen am Greifergrundkörper angeordneten Fingergrundkörper,
- ein Greifglied mit einem ersten Schenkel und einem zweiten Schenkel, der in einem festen Winkel zum ersten Schenkel ausgerichtet angeordnet und mit dem ersten Schenkel starr verbunden ist,
- wenigstens eine Gelenkführung, die ausgebildet ist, den zweite Schenkel am Fingergrundkörper verstellbar zu lagern,
- eine Kraftmessvorrichtung, die ausgebildet ist, sowohl Kräfte in einer ersten Richtung, als auch Kräfte in einer entgegengesetzten zweiten Richtung zu messen,
- wobei der erste Schenkel, an einer ersten Oberfläche eine erste Greiffläche und an einer der ersten Oberfläche gegenüberliegenden zweiten Oberfläche eine zweite Greiffläche aufweist, und
die Kraftmessvorrichtung zwischen dem zweiten Schenkel und dem Fingergrundkörper angeordnet ist und eingerichtet ist, eine auf die erste Greiffläche des ersten Schenkels wirkende Greifkraft und eine auf die zweite Greiffläche des ersten Schenkels wirkende Greifkraft zu messen, wobei die Gelenkführung ein Drehlager aufweist, welches das Greifglied schwenkbar am Fingergrundkörper lagert und wobei die Kraftmessvorrichtung zwischen dem Fingergrundkörper und dem zweiten Schenkel, der durch das Drehlager schwenkbar am Fingergrundkörper gelagert ist, angeordnet ist, um eine am ersten Schenkel angreifende Greifkraft, die eine Zugkraft oder eine Druckkraft sein kann, zu messen.

Der Greifer kann mehr als zwei Greiferfinger aufweisen. Um ein Öffnen und Schließen des Greifers zu erreichen, ist es prinzipiell ausreichend, wenn lediglich ein einziger Greiferfinger beweglich ausgebildet ist und mindestens ein weiterer Greiferfinger dabei starr am Greifergrundkörper befestigt sein kann. Es können jedoch auch zwei, mehr oder alle Greiferfinger beweglich ausgebildet sein. Das Getriebe kann wenigstens einen Antrieb aufweisen, so dass der wenigstens eine bewegliche Greiferfinger angetrieben, insbesondere automatisch bewegt werden kann.

Der Greifer weist mindestens zwei Greiferfinger auf. Die mindestens zwei Greiferfinger können mittels des Getriebes gegeneinander verstellt werden. Dies kann bedeuten, dass die mindestens zwei Greiferfinger aufeinander zu bewegt werden können, um den Greifer zu schließen, so dass ein zwischen den Greiferfingern positioniertes Objekt von außen gegriffen werden kann, und dass die mindestens zwei Greiferfinger voneinander weg bewegt werden können, um den Greifer zu öffnen, so dass ein Objekt wieder losgelassen werden kann.

Der vorherige Absatz beschreibt einen Außengriff. Der Greifer kann aber auch einen Innengriff ausführen. Dabei bewegen sich die Greiferfinger voneinander weg, bis sie das Greifobjekt mit beiden Greiferfingern auf einer Innenseite des Objekts berühren und das Objekt so von innen gegriffen werden kann. Wenn die Greiferfinger danach wieder aufeinander zu gefahren werden, wird das Objekt wieder losgelassen. Ein solcher Innengriff ist beispielsweise dann zweckmäßig, wenn das Objekt ein rohrförmiger Körper ist, in dessen Hohlraum die wenigstens zwei Greiferfinger in einem zusammengefahrenen Zustand eingeführt werden, danach die wenigstens zwei Greiferfinger auseinandergefahren werden, so dass die wenigstens zwei Greiferfinger an einer Innenmantelwand des rohrförmigen Körper anliegen und sich dort einspreizen, so dass der rohrförmige Körper vom Greifer erfasst ist.

Indem der gattungsgemäße Greifer mindestens einen Greiferfinger aufweist, der:
- einen am Greifergrundkörper angeordneten Fingergrundkörper aufweist,
- ein Greifglied mit einem ersten Schenkel und einem zweiten Schenkel aufweist, der in einem festen Winkel zum ersten Schenkel ausgerichtet angeordnet und mit dem ersten Schenkel starr verbunden ist,
- wenigstens eine Gelenkführung aufweist, die ausgebildet ist, den zweite Schenkel am Fingergrundkörper verstellbar zu lagern,
- eine Kraftmessvorrichtung aufweist, die ausgebildet ist, sowohl Kräfte in einer ersten Richtung, als auch Kräfte in einer entgegengesetzten zweiten Richtung zu messen,
- wobei der erste Schenkel, an einer ersten Oberfläche eine erste Greiffläche und an einer der ersten Oberfläche gegenüberliegenden zweiten Oberfläche eine zweite Greiffläche aufweist, und
- wobei die Kraftmessvorrichtung zwischen dem zweiten Schenkel und dem Fingergrundkörper angeordnet ist und eingerichtet ist, eine auf die erste Greiffläche des ersten Schenkels wirkende Greifkraft und eine auf die zweite Greiffläche des ersten Schenkels wirkende Greifkraft zu messen, wird ein Greifer mit einer integrierten Kraftmessvorrichtung geschaffen, welche Kraftmessvorrichtung Greifkräfte an zwei gegenüberliegenden Greifflächen eines Greiferfingers messen kann. So kann mit derselben integrierten Kraftmessvorrichtung eine Greifkraft sowohl im Falle eines Außengriffes als auch im Falle eines Innengriffes gemessen werden.

Indem die Kraftmessvorrichtung ausgebildet ist, sowohl Kräfte in einer ersten Richtung, als auch Kräfte in einer entgegengesetzten zweiten Richtung zu messen, können durch die Kraftmessvorrichtung beispielsweise sowohl Zugkräfte, als auch Druckkräfte aufgenommen bzw. gemessen werden. Die Kraftmessvorrichtung kann dabei derart an dem Greifer angeordnet sein, dass diese Zugkräfte und Druckkräfte unmittelbar auf die Kraftmessvorrichtung einwirken. Insbesondere kann dadurch mit derselben Anordnung mittels des Greifers sowohl in einem Außengriff, als auch in einem Innengriff eine einfache Kraftmessung durchgeführt werden.

Der Fingergrundkörper kann am Greifergrundkörper beispielsweise dadurch angeordnet sein, dass der Fingergrundkörper am Greifergrundkörper gelagert ist. Alternativ kann der Fingergrundkörper einteilig mit dem Greifergrundkörper ausgebildet sein.

Der Fingergrundkörper bildet einen Träger für das Greifglied. Der Fingergrundkörper kann mit einer Abtriebsseite des Getriebes verbunden sein, so dass durch ein Antreiben des Getriebes der Fingergrundkörper relativ zum Greifergrundkörper bewegt wird und somit auch das Greifglied relativ zum Greifergrundkörper verstellt wird. Der Fingergrundkörper kann derart an das Getriebe angekoppelt sein, so dass er eine lineare Bewegung ausführt, um das am Fingergrundkörper befestigten Greifglied relativ zu einem zweiten Greifglied bewegen zu können, wodurch wenigstens zwei gegenüberliegende Greiferfinger wahlweise geöffnet oder geschlossen werden können. Alternativ oder ergänzend kann der Fingergrundkörper jedoch auch derart an das Getriebe angekoppelt sein, so dass er eine rotierende oder schwenkende Bewegung ausführt. Eine solche rotierende oder schwenkende Bewegung kann zweckmäßig sein, um den Greiferfinger wenden zu können, so dass entweder die erste Greiffläche des Greiferfingers dem Objekt zugewandt ist oder seine gegenüberliegende zweite Greiffläche dem Objekt zugewandt ist.

Das Greifglied bildet den eigentlichen Finger des Greiferfingers, der von dem Greifergrundkörper vorspringt, um ein Objekt im Außengriff oder im Innengriff fassen zu können. Demgemäß weist das Greifglied die erste Greiffläche und die zweite Greiffläche auf. Jede Greiffläche kann dadurch gekennzeichnet sein, dass ihre Oberflächen eine vorbestimmte Kontur aufweist. Eine vorbestimmt Kontur kann an die Gestalt eines zu greifenden Objekts angepasst sein. Die vorbestimmt Kontur kann insbesondere der Außenkontur des zu greifenden Objekts entsprechen, d.h. zu dieser identisch sein. Alternativ oder ergänzend zu einer bestimmten Kontur kann jede Greiffläche auch eine spezielle Oberflächenbeschaffenheit aufweisen. Die Oberflächenbeschaffenheit kann insbesondere dazu angepasst sein, um eine Reibkraft zwischen der Greiffläche und dem Objekt zu erhöhen, so dass ein Objekt besonders zuverlässig gegriffen werden kann. Die Oberflächenbeschaffenheit kann aber auch dazu angepasst sein, um Beschädigungen der Oberflächen des Objekts zu verhindern.

Die Greiffläche kann auch eine Kinematik aufweisen, die ein adaptives Anpassen an das Greifobjekt ermöglicht.

Generell kann die Greiffläche beispielsweise zur Erhöhung der Reibung mit einer Riffelung oder einer Rändelstruktur versehen sein. Alternativ oder ergänzend kann die Greiffläche aus einem elastischen Material bestehen. Dazu kann entweder das Greifglied aus einem elastischen Material bestehen, oder alternativ kann das Greifglied mit einem elastischen Material bedeckt oder überzogen sein. Das elastische Material kann ausgebildet sein, in Zusammenwirken mit dem zu greifenden Objekt einen hohen Reibungskoeffizienten aufzuweisen.

Zur Bildung des ersten Schenkels und des zweiten Schenkels kann das Greifglied eine L-förmige Grundform aufweisen. Demgemäß kann der erste Schenkel zusammen mit dem zweiten Schenkel als ein einteiliges Bauteil ausgebildet sein. Der erste Schenkel kann eine erste Längserstreckung aufweisen und der zweite Schenkel kann eine zweite Längserstreckung aufweisen, wobei die beiden Schenkel mit ihren Längserstreckungen vorzugsweise in einem rechten Winkel zueinander ausgerichtet sein können. Der feste Winkel in dem der erste Schenkel und der zweite Schenkel zueinander ausgerichtet angeordnet sind kann demgemäß ein fester Winkel von 90 Grad sein.

Die Gelenkführung, die ausgebildet ist, den zweiten Schenkel am Fingergrundkörper verstellbar zu lagern, soll zumindest überwiegend nur eine Verstellbarkeit in derjenigen Richtung zulassen, in welcher Richtung eine Kraftmessung stattfinden soll. Die Gelenkführung soll demgemäß ausgebildet sein, den zweiten Schenkel lediglich in Kraftmessrichtung verstellbar zu lagern, derart, dass die Kraftmessvorrichtung eine in Verstellrichtung wirkende Kraft messen kann. Dies bedeutet, dass die Gelenkführung demgemäß ausgebildet sein soll, dass der zweite Schenkel in allen anderen Richtungen als der Verstellrichtung zumindest weitgehend oder sogar völlig starr bezüglich des Fingergrundkörpers gelagert sein soll.

Die Kraftmessvorrichtung ist insbesondere eine eindimensionale Kraftmessvorrichtung, d.h. die Kraftmessvorrichtung ist ausgebildet Kräfte nur in einer Raumrichtung zu messen. Die Kraftmessvorrichtung ist jedoch ausgebildet sowohl Zugkräfte, als auch Druckkräfte in der einzelnen vorgegebenen Raumrichtung zu messen. Die Kraftmessvorrichtung kann wenigstens einen Kraftsensor aufweisen. Der Kraftsensor kann beispielsweise eine Kraftmessdose, eine Wägezelle, ein Piezokraftaufnehmer sein und/oder wenigstens einen Dehnmessstreifen (DMS) aufweisen. Die Kraftmessung kann aber auch über ein optisches Reflexionsprinzip erfolgen, bei dem das Licht nach Stärke und/oder Position in Abhängigkeit zur angreifenden Kraft reflektiert wird.

Die Gelenkführung weist ein Drehlager auf, welches das Greifglied schwenkbar am Fingergrundkörper lagert und die Kraftmessvorrichtung zwischen dem Fingergrundkörper und dem zweiten Schenkel, der durch das Drehlager schwenkbar am Fingergrundkörper gelagert ist, angeordnet ist, um eine am ersten Schenkel angreifende Greifkraft, die eine Zugkraft oder eine Druckkraft sein kann, zu messen.

Eine Backenbasis, d.h. der zweite Schenkel kann an einer Seite an einem Backenabtrieb, d.h. am Fingergrundkörper drehbar gelagert sein. Über diese Lagerung werden alle Querkräfte, bis auf die in Rotationsrichtung aufgenommen. Die Backe stützt sich auf der der Lagerung gegenüber liegenden Seite auf einem Zug-Druckkraftsensor ab. Aufgrund der Hebelverhältnisse muss für eine genaue Kraftbestimmung der Abstand bekannt sein, in dem die Kraft an der Backe angreift. Weiterhin findet eine Drehung der Backe in der Lagerung um einen Winkelbetrag statt, in Abhängigkeit von der Steifigkeit des Sensors. Daher bietet sich diese Art der Kraftmessung für einen Greifer mit radialer Zustellbewegung an, da diese Greifer beim Schließen und Öffnen die Winkelstellung der Greiferbacken variiert. Hierbei handelt es sich um ein einfaches Messprinzip zur einachsigen Messung der Kraft auf den Greiferfinger. Eine solche Anordnung ist entkoppelt von Querkräften. Allerdings muss der Abstand des Krafteinleitungsortes zum Drehlager bekannt und bestimmt sein. Die Winkellage des Greifglieds ändert sich bezüglich des Fingergrundkörpers geringfügig.

Die Gelenkführung kann in einer zweiten Ausführungsform eine Parallelogrammführung sein. Mittels einer Parallelogrammführung können die einachsigen Kraftkomponenten genau in diejenige Richtung gemessen werden, in die der Freiheitsagrad der Parallelkinematik weist. Andere eventuell auftretende Greifkräfte werden von der Kinematik der Parallelogrammführung aufgenommen bzw. absorbiert.

Die Backe, d.h. das Greifglied kann über eine Parallelkinematik (Parallelogrammführung) mit dem Abtrieb verbunden sein. Diese Parallelkinematik kann sehr steif ausgeführt sein, so dass Querkräfte zu keiner Verformung der Backe und deren Aufhängung (Fingergrundkörper) führen. Der eine Freiheitsgrad der Parallelkinematik kann sehr leichtgängig sein. Der eine Freiheitsgrad der Parallelkinematik muss jedoch nicht leichtgängig sein. Von Bedeutung ist es in diesem Zusammenhang, dass in einer solchen Ausführungsart die durch die Parallelkinematik dargestellte Feder möglichst nicht gedämpft ist. Beispielsweise im Falle von Festkörpergelenken kann die Parallelkinematik zwar durchaus eine große Federsteifigkeit aufweisen, allerdings folgt die Steifigkeit dabei einer vorbestimmten, unveränderlichen Steifigkeits-Kennlinie, mit derem spezifischen Kraft-/Weg-Verhältnis die Kraftmessvorrichtung kalibriert sein kann. Der Zug-Drucksensor kann frei zwischen Backe und Greiferbasis (Fingergrundkörper) platziert werden, in Abhängigkeit der Platzverhältnisse. Diese Art der Kraftmessung bietet sich für Parallelgreifer an, bei denen sich die Winkellage der Backen beim Zustellen und Öffnen nicht ändert.

Die Parallelogrammführung kann vier Drehgelenke umfassen, von denen zwei Drehgelenke, die in einem ersten Abstand voneinander angeordnet sind, am zweiten Schenkel ausgebildet sind und zwei Drehgelenke, die in einem zweiten Abstand, der gleichlang wie der erste Abstand ist, voneinander angeordnet sind, am Findergrundkörper ausgebildet sind, wobei zwei Koppelstangen vorgesehen sind, von denen jede Koppelstange jeweils eines der Drehgelenke des zweiten Schenkels mit einem der Drehgelenke des Findergrundkörpers verbindet, wobei insbesondere die Koppelstangen jeweils gleichlange wirksame Längen ausweisen, die kleiner sind als der erste Abstand und der zweite Abstand.

Das durch die Parallelogrammführung gebildete Viergelenk weist demgemäß deutlich unterschiedliche Seitenverhältnisse auf. Das Seitenverhältnis kann beispielsweise 1 zu 2 sein, 1 zu 3 sein, oder größer sein. Die Kraftmessvorrichtung kann dabei derart angeordnet und ausgerichtet sein, dass die Kraftmessvorrichtung mit ihrer Kraftmessrichtung parallel zur längeren Seite der Parallelogrammführung ausgerichtet ist. Die Kraftmessvorrichtung kann zwischen einer dem ersten Schenkel gegenüberliegenden Stirnseite des zweiten Schenkels und einer Abstützfläche des Fingergrundkörpers angeordnet sein.

Der zweite Schenkel kann demgemäß eine Längserstreckung mit einer ersten Stirnseite und einer zweiten Stirnseite aufweisen. An der ersten Stirnseite kann der erste Schenkel angeordnet sein und sich dabei in einem rechten Winkel von dem zweiten Schenkel wegerstrecken. An der zweiten Stirnseite, die der ersten Stirnseite gegenüberliegt, stützt sich die Kraftmessvorrichtung einerseits ab. Andererseits stützt sich die Kraftmessvorrichtung an der Abstützfläche des Fingergrundkörpers ab. Die Abstützfläche kann von einer Seitenwand eines Vorsprungs gebildet werden, der seitlich der Längserstreckung des zweiten Schenkels vorspringt. Die Kraftmessvorrichtung ist sowohl fest mit der zweiten Stirnseite des zweiten Schenkels verbunden, als auch fest mit der Abstützfläche, insbesondere mit der Seitenwand des Vorsprungs des Fingergrundkörpers verbunden, so dass nicht nur Druckkräfte, sondern auch Zugkräfte zwischen dem zweiten Schenkel und dem Fingergrundkörper gemessen werden können. Der zweite Schenkel kann eine erste Nut mit zwei gegenüberliegenden Schenkelnutwänden aufweisen und der Fingergrundkörper kann dabei eine zweite Nut mit zwei gegenüberliegenden Grundkörpernutwänden aufweisen, wobei zur Bildung eines Aufnahmeraumes eine der Schenkelnutwände einer der Grundkörpernutwände gegenüberliegt angeordnet ist und die Kraftmessvorrichtung in dem Aufnahmeraum angeordnet ist.

Die erste Nut des zweiten Schenkels liegt der zweiten Nut des Fingergrundkörpers gegenüber, so dass die beiden Nuten den Aufnahmeraum begrenzen. Durch die Ausbildung eines Aufnahmeraums kann die Kraftmessvorrichtung auf platzsparende Weise in den Greiferfinger zwischen dem zweiten Schenkel und dem Fingergrundkörper integriert werden.

Die Kraftmessvorrichtung ist dabei sowohl fest mit einer der Schenkelnutwänden des zweiten Schenkels verbunden, als auch fest mit einer der Grundkörpernutwänden des Fingergrundkörpers verbunden, so dass nicht nur Druckkräfte, sondern auch Zugkräfte zwischen dem zweiten Schenkel und dem Fingergrundkörper gemessen werden können.

Die Kraftmessvorrichtung kann in Kraftmessrichtung zwischen den beiden Koppelstangen angeordnet sein. Die Kraftmessvorrichtung kann demgemäß innerhalb des durch die Parallelogrammführung gebildeten Viergelenks angeordnet sein. Dadurch ergibt sich eine besonders kompakte Bauweise, bei der die Kraftmessvorrichtung nicht nur in den Greiferfinger integriert ist, sondern die Kraftmessvorrichtung auch in die Gelenkführung, d.h. die Parallelogrammführung des Greiferfingers integriert ist.

Die beiden Koppelstangen können zwischen der Kraftmessvorrichtung und der ersten Greiffläche und/oder der zweiten Greiffläche angeordnet sein.

In einer solchen Anordnung befindet sich die Kraftmessvorrichtung somit auf der ersten Greiffläche und/oder der zweiten Greiffläche gegenüberliegenden Seite der Parallelogrammführung. Auch in dieser Anordnung kann sich die Kraftmessvorrichtung an der zweiten Stirnseite des zweiten Schenkels, die der ersten Stirnseite gegenüberliegt, einerseits abstützen. Andererseits kann sich die Kraftmessvorrichtung an einer Abstützfläche des Fingergrundkörpers abstützen. Die Abstützfläche kann von einer Seitenwand eines Vorsprungs gebildet werden, der seitlich der Längserstreckung des zweiten Schenkels vorspringt. Die Kraftmessvorrichtung ist sowohl fest mit der zweiten Stirnseite des zweiten Schenkels verbunden, als auch fest mit der Abstützfläche, insbesondere mit der Seitenwand des Vorsprungs des Fingergrundkörpers verbunden, so dass nicht nur Druckkräfte, sondern auch Zugkräfte zwischen dem zweiten Schenkel und dem Fingergrundkörper gemessen werden können.

Die Kraftmesseinrichtung kann auch so zwischen dem zweiten Schenkel und dem Greifergrundkörper angebracht sein, dass die zu messenden Zug- und Druckkräfte auf die Messeinrichtung als Schubkräfte übertragen werden.

Das Parallelogramm kann auch einteilig ausgeführt sein. Bei den Drehgelenken handelt es sich dann um Festkörpergelenke. Die Koppelstangen sind in einer solchen Ausführungsform somit Teil vom ersten und zweiten Schenkel und können Außenformen aufweisen, die sich auf die Verformbarkeit der Koppelstangen auswirken, wenn eine Zug- bzw. Druckkraft auf den ersten Schenkel wirkt. Diese Festkörpergelenke weisen keine eindeutige Drehachse auf, sondern führen bei Kraftangriff eine Verformung durch, die sich aus deren Form und den Materialeigenschaften ergibt. Die einteilige Parallelkinematik ist dabei so aufgebaut, dass sie Kräfte und Momente in alle Richtungen aufnehmen kann, ohne sich stark zu verformen und nur aufgrund von Kräften, die in die Messrichtung oder entgegengesetzt wirken, eine Parallelverschiebung des ersten Schenkels bezüglich des zweiten Schenkels erfahren. Eine solche einteilige Bauform des Parallelogramms weist für die Messung positive Eigenschaften auf. Die Reibung bei einer Verformung kann gegenüber der Reibung in einer Lagerung, wenn das Parallelogramm mehrteilig aufgebaut wird, vernachlässigt werden. Eine Reibung bei der Verformung geht als Fehler in die Messung ein. Der funktionale Zusammenhang zwischen dem Wert der aufgebrachten Kraft und dem Wert der Verformung kann über die Form- und Materialgebung gut beeinflusst werden und kann so gestaltet sein, dass sich dieser während der Nutzungsdauer der Messbacken nicht ändert. Damit kann der genutzte Messkörper gut und dauerhaft kalibriert werden.

Die Kraftmessvorrichtung kann, alternativ zu einer Messung von Zug- und Druckkräften, zur Messung von Schubkräften ausgebildet sein. Dazu kann die Kraftmessvorrichtung, welche zur Messung von Schubkräften ausgebildet ist, wahlweise innerhalb der Parallelogrammführung angeordnet sein, oder seitlich außerhalb der Parallelogrammführung angeordnet sein. Eine solche Schubkraft-Messvorrichtung kann analog der beschriebenen Ausführungsformen zu Kraftmessvorrichtungen ausgebildet sein, die zum Messen von Zug- und Druckkräften ausgebildet ist, wobei die Anordnung sich dann lediglich dadurch unterscheidet, dass die Schubkraft-Messvorrichtung an zwei Flächen der Greifglieder abgekoppelt ist, die orthogonal zu den Flächen der Greifglieder der Kraftmessvorrichtung zum Messen von Zug- und Druckkräften ausgerichtet ist.

Eine wahlweise Nutzung der ersten Greiffläche des betreffenden Greiferfingers und der gegenüberliegenden zweiten Greiffläche des betreffenden Greiferfingers kann, wie bereits erwähnt, dadurch erfolgen, dass ein Objekt entweder in einem Außengriff erfasst wird oder in einem Innengriff erfasst wird. Eine wahlweise Nutzung der ersten Greiffläche des betreffenden Greiferfingers und der gegenüberliegenden zweiten Greiffläche des betreffenden Greiferfingers kann aber auch dadurch erfolgen, indem der betreffende Greiferfinger bezüglich des Greifergrundkörpers beispielsweise umorientiert wird.

Generell kann das Getriebe beispielsweise ausgebildet sein, den mindestens einen der ersten und zweiten Greiferfinger derart bezüglich des Greifergrundkörpers umorientieren zu können, so dass wahlweise die erste Greiffläche oder die zweite Greiffläche einem zu greifenden Objekt zugewendet werden kann.

Ganz allgemein kann der erfindungsgemäße Greifer ausgebildet und/oder eingerichtet sein, mittels eines Roboters, insbesondere dessen Roboterarm im Raum bewegt zu werden. Eine Robotersteuerung des Roboters kann dabei eingerichtet sein, den wenigstens einen Greiferfinger des Greifers zu bewegen bzw. zu verstellen, um ein Objekt ergreifen und/oder loslassen zu können.

Im Folgenden wird ein beispielhafter Greifer eines Roboters beschrieben, der wenigstens einen erfindungsgemäß ausgebildeten Greiferfinger mit einer Kraftmessvorrichtung aufweist. Das dazu beschriebene Getriebe dient dazu, mittels lediglich eines Antriebsmotors drei Drehgelenke derart abgestimmt bewegen zu können, dass der Greiferfinger eine lineare Bewegung bezüglich des Greifergrundkörpers ausführt. Durch Veränderung, insbesondere Anpassung der beschriebenen Kopplungsvorrichtung kann jedoch auch ein von einer linearen Bewegung abweichender Bewegungsweg für den Greiferfinger erreicht werden. Beispielsweise kann das Getriebe ausgebildet sein, ein Umorientieren des Greiferfingers, insbesondere ein wenden des Greiferfingers zu ermöglichen. Dazu kann der Greifer gegebenenfalls auch mit mehr als einem einzigen Antriebsmotor angesteuert sein.

Beispielsweise kann der Greifer ein Basisglied aufweisen, welches mittels eines ersten Drehgelenks um eine erste Drehachse drehbar bezüglich des Greifergrundkörpers gelagert ist, und ein Zwischenglied, welches mittels eines zweiten Drehgelenks bezüglich des Basisglieds drehbar gelagert ist und zwar um eine zweite Drehachse, die parallel zur ersten Drehachse ausgerichtet und in einem konstanten ersten Abstand von der ersten Drehachse angeordnet ist, des Weiteren aufweisend einen Fingerträger, der einen ersten Greiferfinger trägt und der mittels eines dritten Drehgelenks bezüglich des Zwischenglieds drehbar gelagert ist und zwar um eine dritte Drehachse, die parallel sowohl zur ersten Drehachse als auch zur zweiten Drehachse ausgerichtet und in einem konstanten zweiten Abstand von der zweiten Drehachse angeordnet ist, wobei der Greifer einen den ersten Greiferfinger bewegenden Antriebsmotor aufweist, der ausgebildet ist, den ersten Greiferfinger durch gleichzeitiges Verstellen des ersten Drehgelenks, des zweiten Drehgelenks und des dritten Drehgelenks zu bewegen.

In einer beispielhaften Form also, insbesondere des Getriebes, weist der Greifer ein Basisglied auf, welches mittels eines ersten Drehgelenks um eine erste Drehachse drehbar bezüglich des Greifergrundkörpers gelagert ist, und ein Zwischenglied, welches mittels eines zweiten Drehgelenks bezüglich des Basisglieds drehbar gelagert ist und zwar um eine zweite Drehachse, die parallel zur ersten Drehachse ausgerichtet und in einem konstanten ersten Abstand von der ersten Drehachse angeordnet ist, des Weiteren aufweisend einen Fingerträger, der einen ersten Greiferfinger trägt und der mittels eines dritten Drehgelenks bezüglich des Zwischenglieds drehbar gelagert ist und zwar um eine dritte Drehachse, die parallel sowohl zur ersten Drehachse als auch zur zweiten Drehachse ausgerichtet und in einem konstanten zweiten Abstand von der zweiten Drehachse angeordnet ist, welcher zweite Abstand dieselbe Länge aufweist, wie der erste Abstand, wobei das erste Drehgelenk durch eine erste Kopplungsvorrichtung mit dem zweiten Drehgelenk in einem festgelegten ersten Übersetzungsverhältnis von 1 zu minus 2 gekoppelt ist und das zweite Drehgelenk durch eine zweite Kopplungsvorrichtung mit dem dritten Drehgelenk in einem festgelegten zweiten Übersetzungsverhältnis von 2 zu minus 1 gekoppelt ist und der Greifer einen den ersten Greiferfinger bewegenden Antriebsmotor aufweist, der ausgebildet ist, den ersten Greiferfinger durch gleichzeitiges Verstellen des ersten Drehgelenks, des zweiten Drehgelenks und des dritten Drehgelenks zu bewegen.

Roboterarme mit zugehörigen Robotersteuerungen, insbesondere Industrieroboter sind Arbeitsmaschinen, die zur automatischen Handhabung und/oder Bearbeitung von Objekten mit Werkzeugen ausgerüstet werden können und in mehreren Bewegungsachsen beispielsweise hinsichtlich Orientierung, Position und Arbeitsablauf programmierbar sind. Industrieroboter weisen üblicherweise einen Roboterarm mit mehreren über Gelenke verbundene Glieder und programmierbare Robotersteuerungen (Steuervorrichtungen) auf, die während des Betriebs die Bewegungsabläufe des Roboterarms automatisch steuern bzw. regeln, um einen Roboterflansch des Roboterarms im Raum zu positionieren und zu bewegen. Die Glieder werden dazu über Antriebsmotoren, insbesondere elektrische Antriebsmotoren, die von der Robotersteuerung angesteuert werden, insbesondere bezüglich der Bewegungsachsen des Industrieroboters, welche die Bewegungsfreiheitsgrade der Gelenke repräsentieren, bewegt.

Der Roboter kann beispielsweise ein Industrieroboter sein, der insbesondere ein Knickarmroboter mit seriell aufeinander folgenden Drehachsen, beispielsweise sechs Drehachsen sein kann. Alternativ kann der Roboter ein SCARA-Roboter, d.h. ein horizontaler Gelenkarmroboter sein, welcher in der Regel vier Freiheitsgrade bzw. Achsen, d.h. Gelenke aufweist, von denen drei Gelenke Drehgelenke sein können und ein Gelenk ein Schubgelenk sein kann. Der Roboter kann aber auch ein sogenannter Leichtbauroboter sein, welcher insbesondere sieben seriell aufeinander folgende Drehachsen aufweisen kann.

Leichtbauroboter unterscheiden sich zunächst von üblichen Industrierobotern dadurch, dass sie eine für die Mensch-Maschine-Kooperation günstige Baugröße aufweisen und dabei eine zu ihrem Eigengewicht relativ hohe Tragfähigkeit aufweisen. Daneben können Leichtbauroboter insbesondere auch kraft- und/oder momentgeregelt statt lediglich positionsgeregelt betrieben werden, was beispielsweise eine Mensch-Roboter-Kooperation sicherer macht. Außerdem kann dadurch eine solche sichere Mensch-Maschine-Kooperation (MRK) erreicht werden, dass beispielsweise unbeabsichtigte Kollisionen des Roboterarmes mit Personen, wie beispielsweise Werker und Monteure entweder verhindert oder zumindest derart abgeschwächt werden können, so dass den Personen bzw. Monteuren kein Schaden entsteht. Die erfindungsmäßige Kraftmessung in den Greiferfingern kann für einen MRK-Betrieb genutzt werden, um ein sicheres Schließen und Öffnen der Backen durch eine Überwachung der dabei auftretenden Kräfte zu gewährleisten. Kräfte des Greifers, die sich gegenseitig aufheben, wie sie z.B. beim Schließen der Backen gegen einen Gegenstand auftreten, werden von dem Roboter über die Sensoren, mit denen in den jeweiligen Gelenken die Antriebsmomente des Roboters bestimmt werden, nicht erkannt. Dies kann eine Gefährdung des Nutzers zur Folge haben. Über das sichere Wissen, dass sich zwischen den Backen ein Objekt befindet, dessen Griffbreite bekannt ist und/oder gemessen werden kann, und sichere Information über die Position der Greifbacken im Greifer und/oder sicher Informationen zur Position der Greifbacken relativ zum Greifobjekt vorliegen, kann sichergestellt werden, dass die Backen erst mit einer Kraft schließen, die für den Menschen eine Gefahr darstellen kann, wenn die Greifbacken so nahe an der Oberfläche das Greifgegenstandes heranreichen, dass der Nutzer kein Körperteil mehr zwischen die Backen bewegen kann.

Ein solcher Roboterarm bzw. ein solcher Leichtbauroboter weist vorzugsweise mehr als sechs Freiheitsgrade auf, so dass insoweit ein überbestimmtes System geschaffen wird, wodurch derselbe Punkt im Raum in gleicher Orientierung in mehreren, insbesondere sogar unendlich vielen verschiedenen Posen des Roboterarms erreicht werden kann. Der Leichtbauroboter kann auf externe Krafteinwirkungen in geeigneten Weisen reagieren. Zur Kraftmessung können jeweils an den Gelenken angeordnete Drehmomentsensoren verwendet werden, die in mehreren Raumrichtungen Drehmomente und Kräfte erfassen bzw. messen können. Alternativ oder ergänzend können die externen Kräfte auch sensorlos, beispielsweise anhand der gemessenen Motorströme der Antriebe an den Gelenken des Leichtbauroboters abgeschätzt werden. Als Regelungskonzepte kann beispielsweise eine indirekte Kraftregelung durch Modellierung des Leichtbauroboters als mechanischer Widerstand (Impedanz) oder eine direkte Kraftregelung verwendet werden.

In gleicher Weise kann auch ein SCARA-Roboter über jeweils an den Gelenken angeordnete Drehmomentsensoren verfügen, die in mehreren Raumrichtungen Drehmomente und Kräfte erfassen bzw. messen können. Alternativ oder ergänzend können auch bei einem SCARA-Roboter die externen Kräfte sensorlos, beispielsweise anhand der gemessenen Motorströme der Antriebsmotoren an den Gelenken des SCARA-Roboters abgeschätzt werden.

Das erste Drehgelenk, das zweite Drehgelenk und das dritte Drehgelenk sind beispielsweise in einer festen konstruktiven Konfiguration miteinander gekoppelt. Insoweit weist der Greifer nur einen einzigen Freiheitsgrad auf. Der Greifer kann deshalb mit nur einem einzigen Antriebsmotor geöffnet bzw. geschlossen werden. Ein Öffnen des Greifers erfolgt durch ein Wegbewegen des ersten (beweglichen) Greiferfingers von dem zweiten (feststehenden) Greiferfinger. Ein Schließen des Greifers erfolgt durch ein Zubewegen des ersten (beweglichen) Greiferfingers auf den zweiten (feststehenden) Greiferfinger zu. Der erste Greiferfinger wird von dem einzigen Antriebsmotor des Greifers bewegt. Durch die beispielhafte Kopplung von erstem Drehgelenk, zweitem Drehgelenk und drittem Drehgelenk kann eine robustere und steifere Mechanik geschaffen werden, als dies beispielsweise mit einer Linearführung möglich wäre. Das erste Drehgelenk, das zweite Drehgelenk und das dritte Drehgelenk können in einer dem Fachmann als solches bekannten Weise mittels Wälzlagern sehr steif gelagert werden. Insgesamt können folglich sehr hohe Schließkräfte am Greifer realisiert werden.

Das erste Drehgelenk, das zweite Drehgelenk und das dritte Drehgelenk sind derart miteinander gekoppelt, dass der Fingerträger bzw. der erste Greiferfinger eine lineare Bewegung bezüglich des zweiten (feststehenden) Greiferfingers ausführt. Die Kopplung erfolgt durch eine konstruktive Festlegung des Abstands der zweiten Drehachse des zweiten Drehgelenks von der ersten Drehachse des ersten Drehgelenks, durch eine konstruktive Festlegung des Abstands der dritten Drehachse des dritten Drehgelenks von der zweiten Drehachse des zweiten Drehgelenks und den beiden Übersetzungsverhältnissen von erstem Drehgelenk zu zweitem Drehgelenk und von zweitem Drehgelenk zu drittem Drehgelenk.

Damit sich der erste Greiferfinger trotz alleiniger Verwendung von Drehgelenken auf einer geraden Bahn bewegt, muss der erste Abstand von erster Drehachse zu zweiter Drehachse dieselbe Länge aufweisen, wie der zweite Abstand von zweiter Drehachse zu dritter Drehachse. Dies bedeutet, dass der erste Abstand genauso groß sein muss, wie der zweite Abstand. Außerdem muss sich das erste Drehgelenk durch eine erste Kopplungsvorrichtung gegenüber dem zweiten Drehgelenk in einem festgelegten ersten Übersetzungsverhältnis von 1 zu minus 2 drehen und das zweite Drehgelenk durch eine zweite Kopplungsvorrichtung gegenüber dem dritten Drehgelenk in einem festgelegten zweiten Übersetzungsverhältnis von 2 zu minus 1 drehen. Nur dies hat zur Folge, dass der erste Greiferfinger sich bezüglich des zweiten Greiferfingers auf einer geraden Bahn bewegt, ohne dass sich dabei die Orientierung des ersten Greiferfingers bezüglich des zweiten Greiferfingers ändert.

Der Greifer kann wenigstens einen bezüglich des Greifergrundkörpers feststehenden zweiten Greiferfinger aufweisen. Dies bedeutet, dass in einer beispielhaften Form der Greifer eine Greiferzange bildet, welche zwei Greiferbacken, d.h. zwei Greiferfinger aufweist, die geöffnet und geschlossen werden können, von denen die eine Greiferbacke von dem ersten Greiferfinger gebildet wird und die andere Greiferbacke von dem zweiten Greiferfinger gebildet wird. Ist in dieser beispielhaften Form der zweite Greiferfinger bezüglich des Greifergrundkörpers feststehend ausgeführt, dann wird ein Öffnen und Schließen der Greiferzange dadurch bewirkt, dass der erste (bewegliche) Greiferfinger auf den zweiten (feststehenden) Greiferfinger zu bewegt wird bzw. von dem zweiten (feststehenden) Greiferfinger weg bewegt wird. Der erste Greiferfinger wird mittels des einzigen Antriebsmotors des Greifers bewegt.

Generell lassen sich aber auch andere Arten von Bahnen erzeugen, auf denen sich der erste Greiferfinger zu bewegen vermag. Derartige andere Bahnformen können durch die Auswahl von spezifischen Abständen zwischen den jeweils zwei Drehachsen und durch die Auswahl von spezifischen Übersetzungsverhältnissen vom ersten Drehgelenk zum zweiten Drehgelenk und vom zweiten Drehgelenk zum dritten Drehgelenk erzeugt werden. Die anderen Bahnformen sind dabei jedoch stets durch die jeweilige konstruktive Ausführungsform des Greifers bestimmt d.h. festgelegt und können nicht durch automatisierte und/oder programmierte unterschiedliche Ansteuerung des Greifers erzeugt werden, da der Greifer nur über einen einzigen kinematischen Freiheitsgrad verfügt und insoweit die kinematische Konfiguration der drei Drehgelenke zueinander mechanisch konstruktiv festgelegt ist.

Der Greifergrundkörper kann in sämtlichen Ausführungsvarianten einen Anschlussflansch aufweisen, der zur Befestigung des Greifers an einem Werkzeugflansch eines Roboterarms ausgebildet ist. Auch wenn der Greifer von anderen automatisierten Vorrichtung positioniert werden kann, so ist vorzugsweise jedoch vorgesehen, dass der Greifers von einem Roboterarm im Raum bewegt wird, wobei der Roboterarm von einer Robotersteuerung automatisiert, d.h. insbesondere programmgesteuert bewegt werden kann.

Der Greifer kann einen einzigen Antriebsmotor aufweisen, der ausgebildet ist, den ersten Greiferfinger relativ zum Greifergrundkörper auf einer geraden Bahn zu verstellen, ohne dass sich die Orientierung des ersten Greiferfingers dabei ändert.

Bei einem kraft- und/oder momentgeregelten Ansteuern des Antriebsmotors des Greifers können die Drehgelenke des Greifers insoweit hinsichtlich ihrer Steifigkeit parametriert sein. In allen Ausführungen kann dazu das kraft- und/oder momentgeregelten Ansteuern des Antriebsmotors des Greifers mittels Impedanzregelung oder Admittanzregelung erfolgen. Eine Greifersteuerung oder eine Robotersteuerung kann eingerichtet sein, eine für die sichere Mensch-Roboter-Kooperation geeignete Nachgiebigkeit des ersten Greiferfingers am Greifer insbesondere mittels Impedanzregelung oder Admittanzregelung zu erzeugen. In einer derartigen Nachgiebigkeitsregelung kann ein Handfahrbetrieb auch bedeuten, dass der erste Greiferfinger am Greifer auch von einem Werker handgeführt bewegt werden können, d.h. der erste Greiferfinger des Greifers auch manuelle verstellt werden kann.

Konkrete Ausführungsbeispiele sind in der nachfolgenden Beschreibung unter Bezugnahme auf die beigefügten Figuren näher erläutert. Der Schutzumfang der Erfindung wird durch die Ansprüche definiert.

Es zeigen:
- Fig. 1: eine perspektivische Ansicht eines Industrieroboters in Art eines Sechsachs-Knickarmroboters;
- Fig. 2: eine perspektivische Ansicht eines Roboters in Art eines Leichtbauroboters;
- Fig. 3: eine perspektivische Ansicht eines Roboters in Art eines SCARA-Roboters;
- Fig. 4: eine perspektivische Darstellung eines beispielhaf-ten Greifers, der an einem Werkzeugflansch eines Ro-boterarms gemäß Fig. 2 befestigt ist und der einen beweglichen Greiferfinger und zwei feststehende Greiferfinger aufweist;
- Fig. 5: eine perspektivische Darstellung eines abgewandelten Greifers, der einen erfindungsgemäß beweglichen Greiferfinger und einen feststehenden Greiferfinger aufweist;
- Fig. 6: eine Draufsicht auf den Greifer gemäß Fig. 5 von unten;
- Fig. 7: eine perspektivische Darstellung des beispielhaften Greifers gemäß Fig. 4 bis 6 mit einer repräsentativen Ausführungsform von erfindungsgemäßen Greiferfingern;
- Fig. 8: eine perspektivische Darstellung des Greifers gemäß Fig. 7 mit einem umorientierten Greiferfinger, so dass eine gegenüberliegende von zwei Greifflächen den anderen Greiferfingern zugewandt ist;
- Fig. 9: eine schematische Darstellung zweier erfindungsgemäßer Greiferfinger, bei denen die beiden ersten Greifflächen ein Objekt greifen;
- Fig. 10: eine schematische Darstellung zweier umorientierter Greiferfinger, bei denen die beiden zweiten Greifflächen das Objekt greifen;
- Fig. 11: eine schematische Darstellung einer abgewandelten zweiten Ausführungsvariante eines Greiferfingers;
- Fig. 12: eine schematische Darstellung einer abgewandelten dritten Ausführungsvariante eines Greiferfingers;
- Fig. 13: eine schematische Darstellung einer abgewandelten vierten Ausführungsvariante eines Greiferfingers;
- Fig. 14: eine schematische Darstellung einer Kraftmessvorrichtung, die zur Messung von Schubkräften ausgebildet ist, in einer ersten Ausführungsvariante; und
- Fig. 15: eine schematische Darstellung einer Kraftmessvorrichtung, die zur Messung von Schubkräften ausgebildet ist, in einer zweiten Ausführungsvariante.

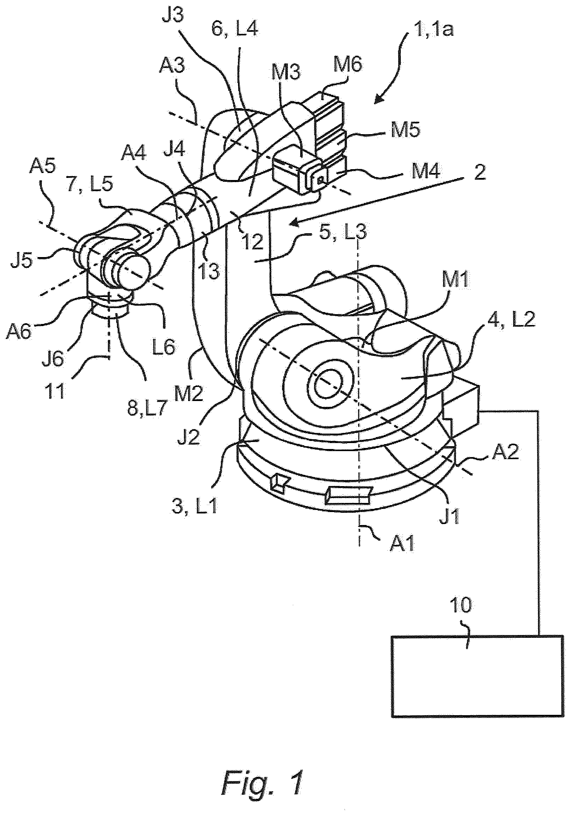

Die Fig. 1 zeigt einen Roboter 1, der einen Roboterarm 2 und eine Robotersteuerung 10 aufweist. Der Roboterarm 2 umfasst im Falle des vorliegenden Ausführungsbeispiels mehrere, nacheinander angeordnete und mittels Gelenke J1 bis J6 drehbar miteinander verbundene Glieder L1 bis L7.

Die Robotersteuerung 10 des Roboters 1 ist ausgebildet bzw. eingerichtet, ein Roboterprogramm auszuführen, durch welches die Gelenke J1 bis J6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Motoren M1 bis M6 verbunden, die ausgebildet sind, die Gelenke J1 bis J6 des Roboters 1 zu verstellen.

Bei den Gliedern L1 bis L7 handelt es sich im Falle des vorliegenden Ausführungsbeispiels eines Industrieroboters 1a um ein Gestell 3 und ein relativ zum Gestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Werkzeugflansch 8 ausgeführten Befestigungsvorrichtung zum Befestigen eines erfindungsgemäßen Greifers 11. Die Schwinge 5 ist am unteren Ende, d.h. an dem Gelenk J2 der Schwinge 5, das auch als Schwingenlagerkopf bezeichnet werden kann, auf dem Karussell 4 um eine vorzugsweise horizontale Drehachse A2 schwenkbar gelagert.

Am oberen Ende der Schwinge 5 ist an dem ersten Gelenk J3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke J1 bis J6 sind durch jeweils einen der elektrischen Motoren M1 bis M6 über die Robotersteuerung 10 programmgesteuert antreibbar. Generell kann dazu zwischen jedem der Glieder L1 bis L7 und dem jeweils zugeordneten elektrischen Motoren M1 bis M6 ein Getriebe vorgesehen sein. Im Falle des in Fig. 1 gezeigten Ausführungsbeispiels ist das Glied L7 als ein Werkzeugflansch ausgebildet, zum Befestigen eines erfindungsgemäßen Greifers 11.

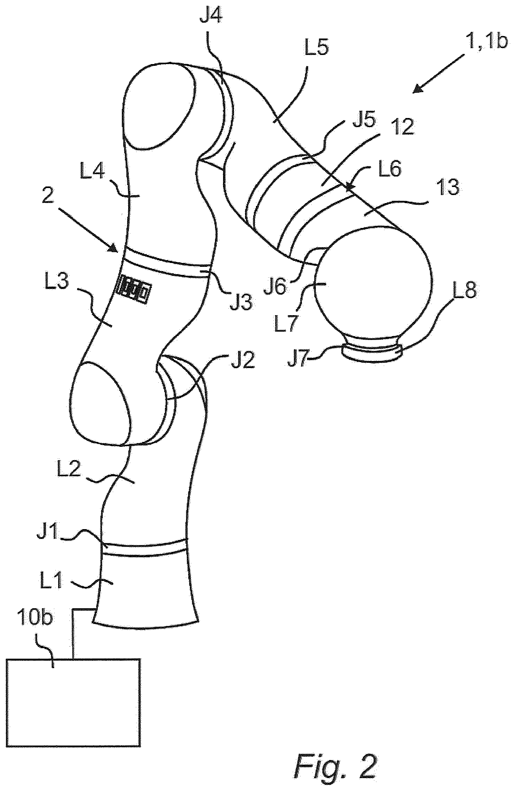

Die Fig. 2 zeigt einen Roboter 1 in einer beispielhaften Ausführung als ein so genannter Leichtbauroboter 1b, der einen Roboterarm 2 und eine Robotersteuerung 10b aufweist. Der Roboterarm 2 umfasst im Falle des vorliegenden Ausführungsbeispiels acht, nacheinander angeordnete und mittels Gelenke J1-J7 drehbar miteinander verbundene Glieder L1-L8. Im Falle des in Fig. 2 gezeigten Ausführungsbeispiels ist das Glied L8 als ein Werkzeugflansch ausgebildet, zum Befestigen eines erfindungsgemäßen Greifers 11.

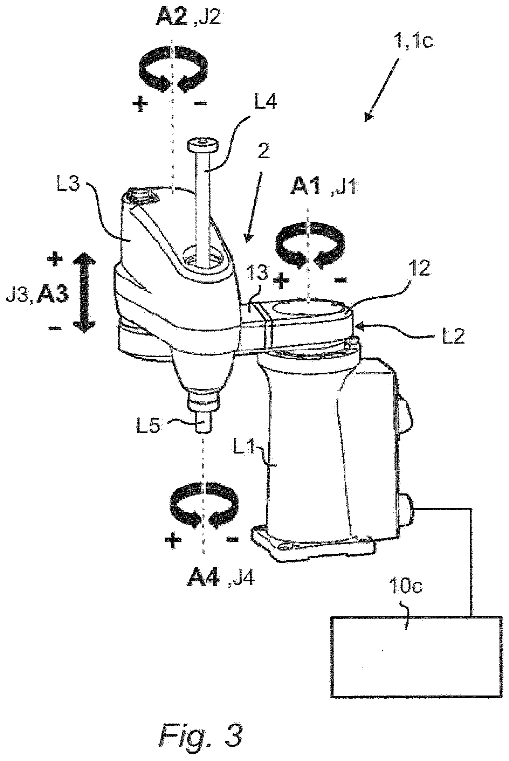

Die Fig. 3 zeigt einen Roboter 1 in einer beispielhaften Ausführung als ein so genannter SCARA-Roboter 1c, der einen Roboterarm 2 und eine Robotersteuerung 10c aufweist. Der Roboterarm 2 umfasst im Falle des vorliegenden Ausführungsbeispiels fünf, nacheinander angeordnete und mittels Gelenke J1-J4 drehbar miteinander verbundene Glieder L1-L5. Im Falle des in Fig. 3 gezeigten Ausführungsbeispiels ist das Glied L5 als ein Werkzeugflansch ausgebildet, zum Befestigen eines erfindungsgemäßen Greifers 11.

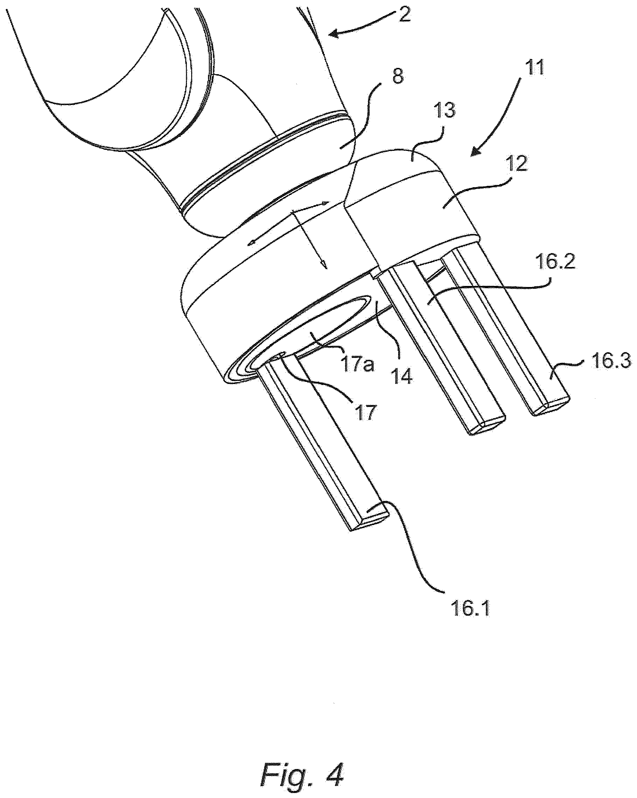

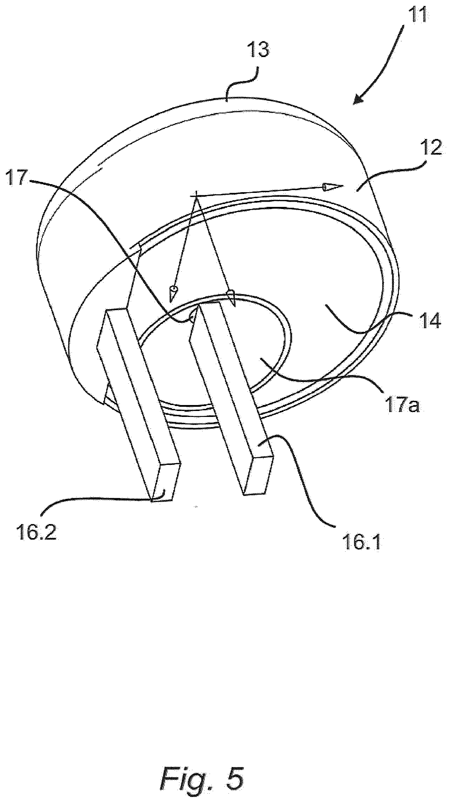

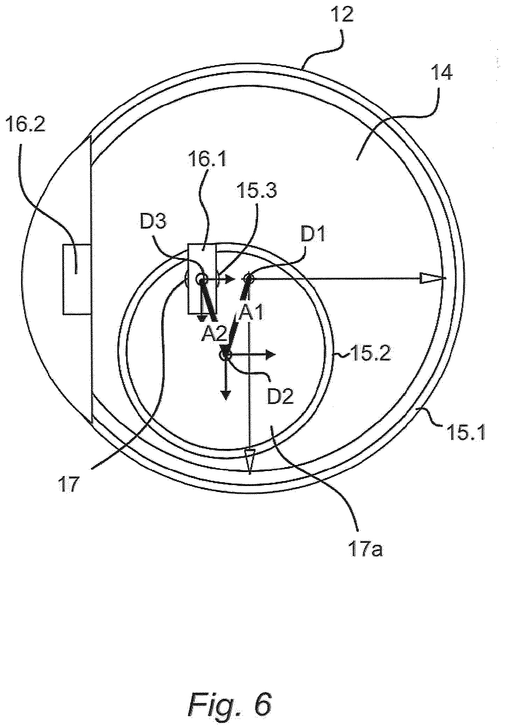

Im Falle der Ausführungsbeispiele gemäß Fig. 4 bis Fig. 6 weist der Greifer 11 einen Greifergrundkörper 12 auf, der einen Anschlussflansch 13 umfasst, der zur Befestigung des Greifers 11 an dem Werkzeugflansch 8 des Roboterarms 2 ausgebildet ist. Der Greifer 11 weist außerdem ein Basisglied 14 auf, welches mittels eines ersten Drehgelenks 15.1 (Fig. 6) um eine erste Drehachse D1 drehbar am Greifergrundkörper 12 gelagert ist. Der Greifer 11 weist des Weiteren einen ersten Greiferfinger 16.1 auf, der mittels eines zweiten Drehgelenks 15.2 um eine zweite Drehachse D2, die parallel zur ersten Drehachse D1 ausgerichtet ist, bezüglich des Basisglieds 14 drehbar gelagert ist. Der Greifer 11 weist darüber hinaus wenigstens einen zweiten Greiferfinger 16.2, 16.3 auf.

Der Greifer 11 weist einen Fingerträger 17 auf, an dem der erste Greiferfinger 16.1 befestigt ist. Der Fingerträger 17 ist mittels eines dritten Drehgelenks 15.3 um eine dritte Drehachse D3, die parallel sowohl zur ersten Drehachse D1 als auch zur zweiten Drehachse D2 ausgerichtet ist, an einem Zwischenglied 17a des Greifers 11 drehbar gelagert. Das Zwischenglied 17a ist seinerseits mittels des zweiten Drehgelenks 15.2 um die zweite Drehachse D2 drehbar an dem Basisglied 14 gelagert.

In diesen Ausführungsformen bilden die Glieder des Greifers 11, welche durch den Greifergrundkörper 12, das Basisglied 14, das Zwischenglied 17a und dem Fingerträger 17 gebildet werden, eine kinematische Kette von Gliedern, die durch das erste Drehgelenk 15.1, das zweite Drehgelenk 15.2 und das dritte Drehgelenk 15.3 drehbar verstellt werden können, wie dies im Folgenden noch näher erläutert ist. Die drei Drehachsen D1, D2 und D3 des ersten Drehgelenk 15.1, des zweiten Drehgelenks 15.2 und des dritten Drehgelenks 15.3 sind dabei parallel zueinander ausgerichtet. Im Ergebnis kann dadurch der auf dem Fingerträger 17 montierte erste Greiferfinger 16.1 in der Ebene der zweiten Stirnseite des Greifergrundkörpers 12 auf einer geraden Bahn auf den feststehenden zweiten Greiferfinger 16.2 bzw. auf den dritten Greiferfinger 16.3 zubewegt werden bzw. von diesem wegbewegt werden. Wenn die Abstände zwischen der ersten Drehachse D1 und der zweiten Drehachse D2 bzw. zwischen der zweiten Drehachse D2 und der dritten Drehachse D3 gleich sind, kann der erste Greiferfinger 16.1 auf jeder beliebigen Bahn und in jeder beliebigen Orientierung auf der Ebene der zweiten Stirnseite des Greifergrundkörpers verfahren werden, unter der Voraussetzung, dass jeder der drei Drehachsen unabhängig von den anderen in ihrer Bewegung angesteuert werden kann.

Das Basisglied 14 weist eine rotationssymmetrische Außenmantelwand auf, an der das Basisglied 14 vollständig innerhalb der Außenkontur des Greifergrundkörpers 12 drehbar gelagert ist. Das Zwischenglied 17a des Greifers 11 weist eine rotationssymmetrische Außenmantelwand auf, an der das Zwischenglied 17a vollständig innerhalb der Außenkontur des Basisglieds 14 drehbar gelagert ist. Der Fingerträger 17 des Greifers 11 weist eine rotationssymmetrische Außenmantelwand auf, an der der Fingerträger 17 vollständig innerhalb der Außenkontur des Zwischenglieds 17a drehbar gelagert ist.

In der Fig. 6 ist ein repräsentatives Beispiel des Greifers 11 gezeigt. Der Greifer 11 weist den Greifergrundkörper 12, das Basisglied 14, welches mittels des ersten Drehgelenks 15.1 um eine erste (sich senkrecht aus der Zeichnungsebene heraus erstreckende) Drehachse D1 drehbar bezüglich des Greifergrundkörpers 12 gelagert ist, und das Zwischenglied 17a auf, welches mittels des zweiten Drehgelenks 15.2 bezüglich des Basisglieds 14 drehbar gelagert ist und zwar um eine zweite (sich senkrecht aus der Zeichnungsebene heraus erstreckende) Drehachse D2, die parallel zur ersten Drehachse D1 ausgerichtet und in einem konstanten ersten Abstand A1 von der ersten Drehachse D1 angeordnet ist. Der Greifer 11 weist außerdem einen Fingerträger 17 auf, der den ersten Greiferfinger 16.1 trägt und der mittels eines dritten Drehgelenks 15.3 bezüglich des Zwischenglieds 17a drehbar gelagert ist und zwar um eine dritte (sich senkrecht aus der Zeichnungsebene heraus erstreckende) Drehachse D3, die parallel sowohl zur ersten Drehachse als auch zur zweiten Drehachse ausgerichtet und in einem konstanten zweiten Abstand A2 von der zweiten Drehachse D2 angeordnet ist, welcher zweite Abstand A2 dieselbe Länge aufweist, wie der erste Abstand A1.

In allen dargestellten Ausführungsvarianten kann der Greifer 11 einen einzigen Antriebsmotor aufweisen, der ausgebildet ist, den ersten Greiferfinger 16.1 relativ zum Greifergrundkörper 12 auf einer geraden Bahn zu verstellen, ohne dass sich die Orientierung des ersten Greiferfingers 16.1 dabei ändert.

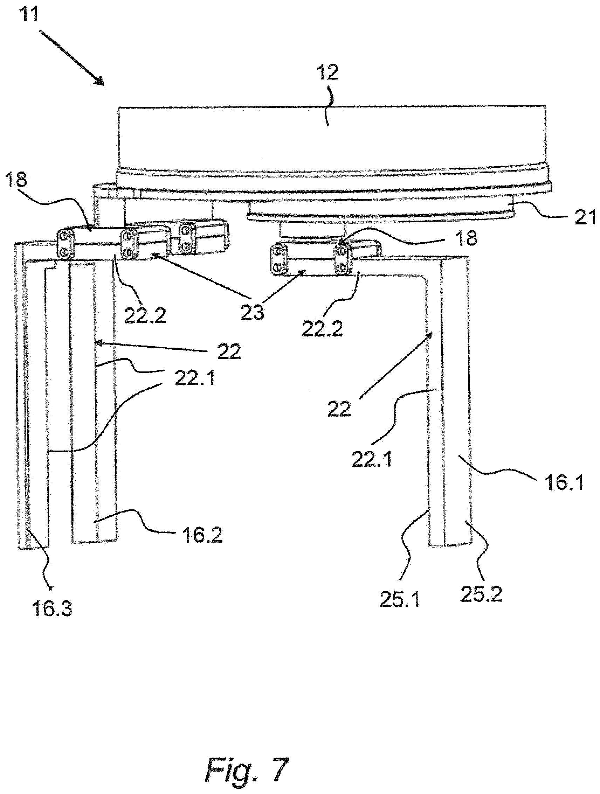

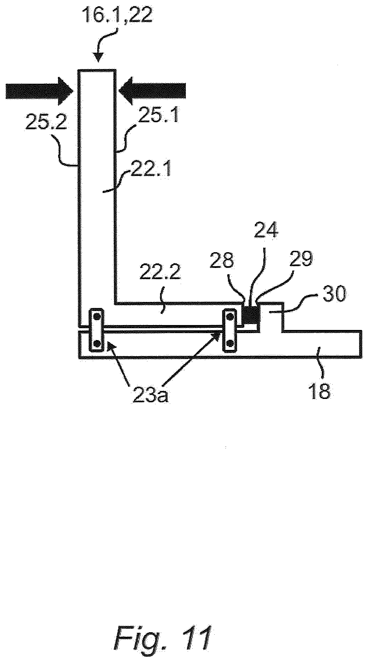

In den Figuren 7 bis 15 sind beispielhafte Ausführungsformen einesGreifers 11 schematisch gezeigt.

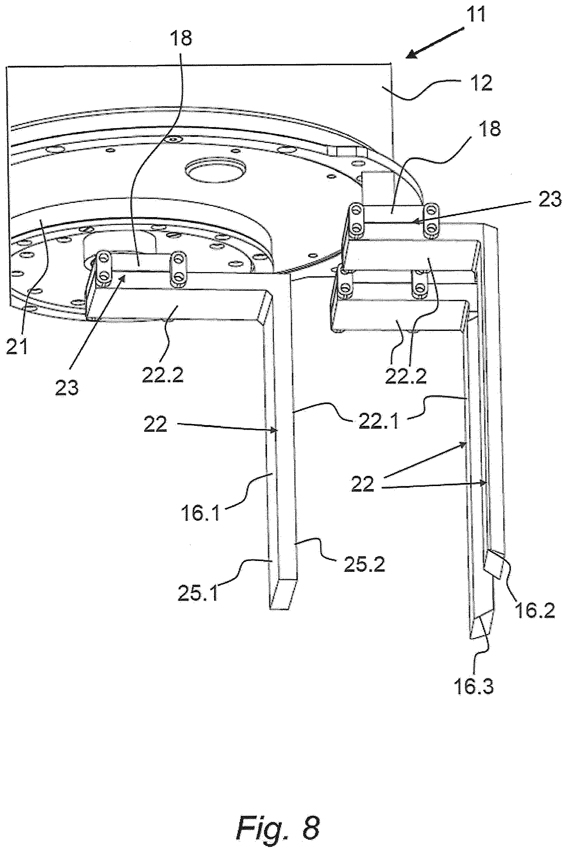

Der in Fig. 7 und Fig. 8 gezeigte Greifer 11 weist einen Greifergrundkörper 12, wenigstens einen ersten Greiferfinger 16.1 und wenigstens einen zweiten Greiferfinger 16.2, 16.3, sowie ein Getriebe 21 auf, das ausgebildet ist, den wenigstens einen ersten Greiferfinger 16.1 und den wenigstens einen zweiten Greiferfinger 16.2 relativ zueinander verstellbar am Greifergrundkörper 12 zu lagern.

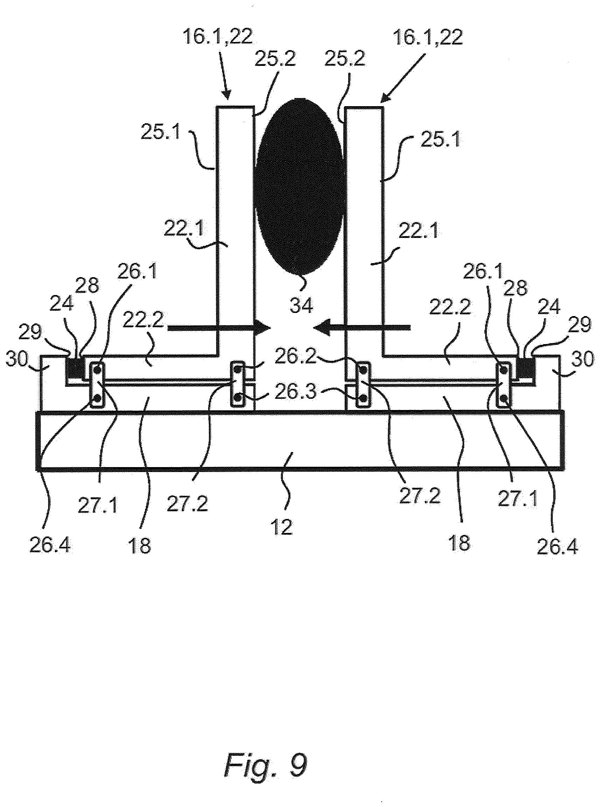

Im Falle der vorliegenden Ausführungsbeispiele weisen sowohl der erste Greiferfinger 16.1,, als auch die zweiten Greiferfinger 16.2, 16.3 jeweils auf:
- einen am Greifergrundkörper 12 gelagerten Fingergrundkörper 18,
- ein Greifglied 22 mit einem ersten Schenkel 22.1 und einem zweiten Schenkel 22.2, der in einem festen Winkel zum ersten Schenkel 22.1 ausgerichtet angeordnet und mit dem ersten Schenkel 22.1 starr verbunden ist,
- wenigstens eine Gelenkführung 23, die ausgebildet ist, den zweite Schenkel 22.2 am Fingergrundkörper 18 verstellbar zu lagern,
- eine Kraftmessvorrichtung 24 (Fig. 9 bis Fig. 13), die ausgebildet ist, sowohl Zugkräfte in einer ersten Richtung, als auch Druckkräfte in einer entgegengesetzten zweiten Richtung zu messen,
- wobei der erste Schenkel 22.1, an einer ersten Oberfläche eine erste Greiffläche 25.1 und an einer der ersten Oberfläche gegenüberliegenden zweiten Oberfläche eine zweite Greiffläche 25.2 aufweist, und
die Kraftmessvorrichtung 24 zwischen dem zweiten Schenkel 22.2 und dem Fingergrundkörper 18 angeordnet ist und eingerichtet ist, eine auf die erste Greiffläche 25.1 des ersten Schenkels 22.1 wirkende Greifkraft und eine auf die zweite Greiffläche 25.2 des ersten Schenkels 22.1 wirkende Greifkraft zu messen.

Im Falle der Ausführungsbeispiele der Fig. 7 bis Fig. 12 und Fig. 14 bis Fig. 15 ist die Gelenkführung 23 als eine Parallelogrammführung 23a ausgebildet.

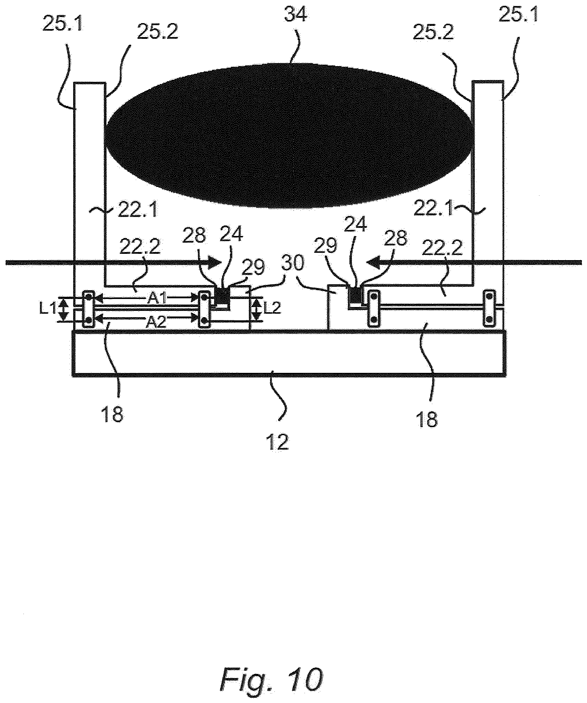

Die Parallelogrammführung 23a umfasst vier Drehgelenke 26.1, 26.2, 26.3, 26.4, hierbei kann es sich auch um Festkörpergelenke handeln, die keinen eindeutigen Drehpunkt aufweisen, von denen zwei Drehgelenke 26.1, 26.2, die in einem ersten Abstand A1 voneinander angeordnet sind, am zweiten Schenkel 22.2 ausgebildet sind und zwei Drehgelenke 26.3, 26.4, die in einem zweiten Abstand A2, der gleichlang wie der erste Abstand A1 ist, voneinander angeordnet sind, am Findergrundkörper 18 ausgebildet sind, und zwei Koppelstangen 27.1, 27.2 vorgesehen sind, von denen jede Koppelstange 27.1, 27.2 jeweils eines der Drehgelenke des zweiten Schenkels 26.1, 26.2 mit einem der Drehgelenke 26.3, 26.4 des Findergrundkörpers 18 verbindet, wobei die Koppelstangen 27.1, 27.2 jeweils gleichlange wirksame Längen L1, L2 ausweisen, die kleiner sind als der erste Abstand A1 und der zweite Abstand A2 (Fig. 10). Der kinematische Zusammenhang der Längen zwischen den Festkörpergelenken kann bei einem einteiligen Parallelogramm genauso gegeben sein. Er kann aber auch anders sein, beispielsweise derart, dass nur die Verformungen unter Krafteinwirkung so gestaltet sind, dass sich der erste Schenkel zum zweiten Schenkel parallel verformt.

Gemäß den Ausführungsbeispielen der Fig. 9 bis Fig. 11 ist die Kraftmessvorrichtung 24 zwischen einer dem ersten Schenkel 22.1 gegenüberliegenden Stirnseite 28 des zweiten Schenkels 22.2 und einer Abstützfläche 29 des Fingergrundkörpers 18 angeordnet.

Der zweite Schenkel 22.2 kann demgemäß eine Längserstreckung mit einer ersten Stirnseite und einer zweiten Stirnseite aufweisen. An der ersten Stirnseite kann der erste Schenkel 22.1 angeordnet sein und sich dabei in einem rechten Winkel von dem zweiten Schenkel 22.2 wegerstrecken. An der zweiten Stirnseite, die der ersten Stirnseite gegenüberliegt, stützt sich die Kraftmessvorrichtung 24 einerseits ab. Andererseits stützt sich die Kraftmessvorrichtung 24 an der Abstützfläche 29 des Fingergrundkörpers 18 ab. Die Abstützfläche 29 kann von einer Seitenwand eines Vorsprungs 30 gebildet werden, der seitlich der Längserstreckung des zweiten Schenkels 22.2 vorspringt.

Die beiden Koppelstangen 27.1, 27.2 sind in Kraftmessrichtung zwischen der Kraftmessvorrichtung 24 und der zweiten Greiffläche 25.2 angeordnet. In einer solchen Anordnung befindet sich die Kraftmessvorrichtung 24 somit auf einer der ersten Greiffläche 25.1 und der zweiten Greiffläche 25.2 gegenüberliegenden Seite der Parallelogrammführung 23a. Auch in dieser Anordnung kann sich die Kraftmessvorrichtung 24 an der zweiten Stirnseite 28 des zweiten Schenkels 22.2, die der ersten Stirnseite gegenüberliegt, einerseits abstützen. Andererseits kann sich die Kraftmessvorrichtung 24 an der Abstützfläche 29 des Fingergrundkörpers 18 abstützen. Die Abstützfläche 29 kann von einer Seitenwand des Vorsprungs 30 gebildet werden, der seitlich der Längserstreckung des zweiten Schenkels 22.2 vorspringt. Die Kraftmessvorrichtung 24 ist sowohl fest mit der zweiten Stirnseite 28 des zweiten Schenkels 22.2 verbunden, als auch fest mit der Abstützfläche 29, insbesondere mit der Seitenwand des Vorsprungs 30 des Fingergrundkörpers 18 verbunden, so dass nicht nur Druckkräfte, sondern auch Zugkräfte zwischen dem zweiten Schenkel 22.2 und dem Fingergrundkörper 18 gemessen werden können.

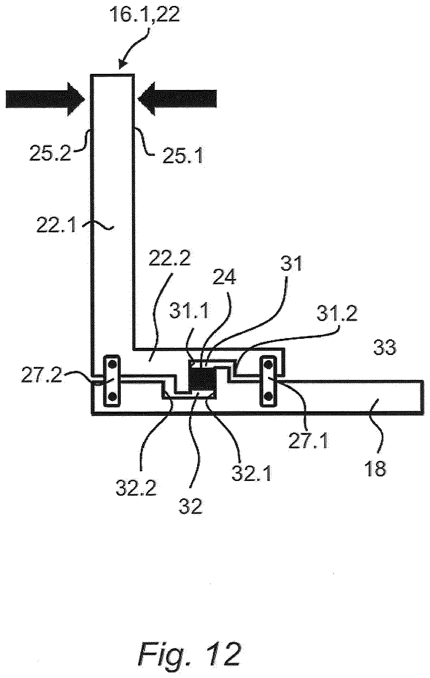

In einer abgewandelten Ausführungsform der Fig. 12 weist der zweite Schenkel 22.2 eine erste Nut 31 mit zwei gegenüberliegenden Schenkelnutwänden 31.1, 31.2 auf und der Fingergrundkörper 18 eine zweite Nut 32 mit zwei gegenüberliegenden Grundkörpernutwänden 32.1, 32.2 auf, wobei eine der Schenkelnutwände 31.1 unter Bildung eines Aufnahmeraumes 33 einer der Grundkörpernutwände 32.1 gegenüberliegt angeordnet ist und die Kraftmessvorrichtung 24 in dem Aufnahmeraum 33 angeordnet ist.

Die erste Nut 31 des zweiten Schenkels 22.2 liegt der zweiten Nut 32 des Fingergrundkörpers 18 gegenüber, so dass die beiden Nuten 31, 32 den Aufnahmeraum 33 begrenzen. Durch die Ausbildung eines Aufnahmeraums 33 kann die Kraftmessvorrichtung 24 auf platzsparende Weise in dem Greiferfinger 16.1 zwischen dem zweiten Schenkel 22.2 und dem Fingergrundkörper 18 integriert werden.

Die Kraftmessvorrichtung 24 ist dabei sowohl fest mit der Schenkelnutwand 31.1 des zweiten Schenkels 22.2 verbunden, als auch fest mit der Grundkörpernutwand 32.1 des Fingergrundkörpers 18 verbunden, so dass nicht nur Druckkräfte, sondern auch Zugkräfte zwischen dem zweiten Schenkel 22.2 und dem Fingergrundkörper 18 gemessen werden können.

Die Kraftmessvorrichtung 24 ist dabei in Kraftmessrichtung zwischen den beiden Koppelstangen 27.1, 27.2 angeordnet, kann aber auch in einem Winkel, z.B. 90° dazu angeordnet sein.

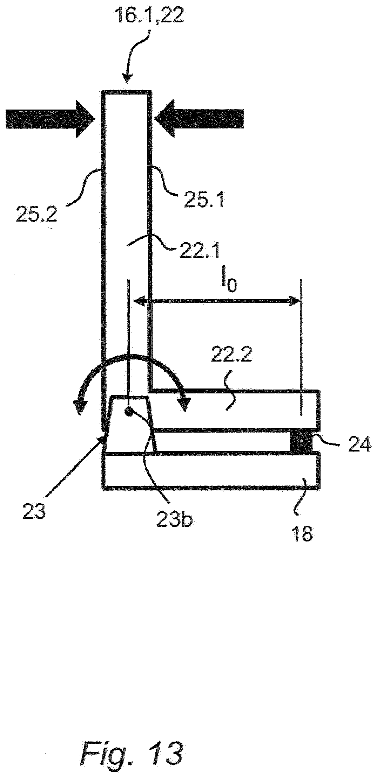

In einer alternativen Ausführungsform der Fig. 13 weist die Gelenkführung 23 ein Drehlager 23b auf, welches das Greifglied 22 schwenkbar am Fingergrundkörper 18 lagert, wobei die Kraftmessvorrichtung 24 zwischen dem Fingergrundkörper 18 und dem zweiten Schenkel 22.2, der durch das Drehlager 23b schwenkbar am Fingergrundkörper 18 gelagert ist, angeordnet ist, um eine am ersten Schenkel 22.1 angreifende Greifkraft, die eine Zugkraft oder eine Druckkraft sein kann, zu messen.

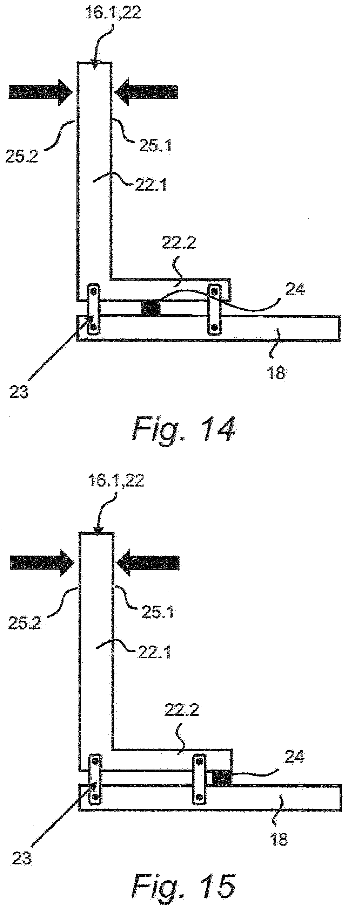

Die Kraftmessvorrichtung 24 gemäß Fig. 14 ist zur Messung von Schubkräften ausgebildet. Dazu ist die Kraftmessvorrichtung 24 innerhalb der Parallelogrammführung (Gelenkführung 23) angeordnet. Aufgrund von Zug- oder Druckkräften, die auf die Parallelogrammführung (Gelenkführung 23) einwirken, beispielsweise aufgrund eines Innengriffes oder eines Außengriffes, der externe Druckkräfte (Pfeile) wahlweise auf der ersten Greiffläche 25.1 oder auf der zweiten Greiffläche 25.2 in das Greifglied 22 einleitet, wirken in der gezeigten Anordnung der Fig. 14 Schubkräfte auf die Kraftmessvorrichtung 24 ein.

Die Kraftmessvorrichtung 24 gemäß Fig. 15 ist zur Messung von Schubkräften ausgebildet. Dazu ist die Kraftmessvorrichtung 24 außerhalb der Parallelogrammführung (Gelenkführung 23) angeordnet. Aufgrund von Zug- oder Druckkräften, die auf die Parallelogrammführung (Gelenkführung 23) einwirken, beispielsweise aufgrund eines Innengriffes oder eines Außengriffes, der externe Druckkräfte (Pfeile) wahlweise auf der ersten Greiffläche 25.1 oder auf der zweiten Greiffläche 25.2 in das Greifglied 22 einleitet, wirken in der gezeigten Anordnung der Fig. 14 Schubkräfte auf die Kraftmessvorrichtung 24 ein.

## Patentansprüche

1. Greifer, aufweisend einen Greifergrundkörper (12), wenigstens einen ersten Greiferfinger (16.1) und wenigstens einen zweiten Greiferfinger (16.2, 16.3), sowie ein Getriebe (21), das ausgebildet ist, den wenigstens einen ersten Greiferfinger (16.1) und den wenigstens einen zweiten Greiferfinger (16.2) relativ zueinander verstellbar am Greifergrundkörper (12) zu lagern, wobei mindestens einer der ersten und zweiten Greiferfinger (16.1, 16.2, 16.3) aufweist:
- einen am Greifergrundkörper (12) angeordneten Fingergrundkörper (18),
- ein Greifglied (22) mit einem ersten Schenkel (22.1) und einem zweiten Schenkel (22.2), der in einem festen Winkel zum ersten Schenkel (22.1) ausgerichtet angeordnet und mit dem ersten Schenkel (22.1) starr verbunden ist,
- wenigstens eine Gelenkführung (23), die ausgebildet ist, den zweite Schenkel (22.2) am Fingergrundkörper (18) verstellbar zu lagern,
- eine Kraftmessvorrichtung (24), die ausgebildet ist, sowohl Kräfte in einer ersten Richtung, als auch Kräfte in einer entgegengesetzten zweiten Richtung zu messen,
- wobei der erste Schenkel (22.1), an einer ersten Oberfläche eine erste Greiffläche (25.1) und an einer der ersten Oberfläche gegenüberliegenden zweiten Oberfläche eine zweite Greiffläche (25.2) aufweist, und
die Kraftmessvorrichtung (24) zwischen dem zweiten Schenkel (22.2) und dem Fingergrundkörper (18) angeordnet ist und eingerichtet ist, eine auf die erste Greiffläche (25.1) des ersten Schenkels (22.1) wirkende Greifkraft und eine auf die zweite Greiffläche (25.2) des ersten Schenkels (22.1) wirkende Greifkraft zu messen, **dadurch gekennzeichnet, dass**
die Gelenkführung (23) ein Drehlager (23b) aufweist, welches das Greifglied (22) schwenkbar am Fingergrundkörper (18) lagert und die Kraftmessvorrichtung (24) zwischen dem Fingergrundkörper (18) und dem zweiten Schenkel (22.2), der durch das Drehlager (23b) schwenkbar am Fingergrundkörper (18) gelagert ist, angeordnet ist, um eine am ersten Schenkel (22.1) angreifende Greifkraft, die eine Zugkraft oder eine Druckkraft sein kann, zu messen.

2. Greifer nach Anspruch 1, **dadurch gekennzeichnet, dass** die Gelenkführung (23) eine Parallelogrammführung ist.

3. Greifer nach Anspruch 2, **dadurch gekennzeichnet, dass** die Parallelogrammführung vier Drehgelenke (26.1, 26.2, 26.3, 26.4) umfasst, von denen zwei Drehgelenke (26.1, 26.2), die in einem ersten Abstand (A1) voneinander angeordnet sind, am zweiten Schenkel (22.2) ausgebildet sind und zwei Drehgelenke (26.3, 26.4), die in einem zweiten Abstand (A2), der gleichlang wie der erste Abstand (A1) ist, voneinander angeordnet sind, am Findergrundkörper (18) ausgebildet sind, und zwei Koppelstangen (27.1, 27.2) vorgesehen sind, von denen jede Koppelstange (27.1, 27.2) jeweils eines der Drehgelenke (26.1, 26.2) des zweiten Schenkels (22.2) mit einem der Drehgelenke (26.3, 26.4) des Findergrundkörpers (18) verbindet, wobei insbesondere die Koppelstangen (27.1, 27.2) jeweils gleichlange wirksame Längen (L1, L2) ausweisen, die kleiner sind als der erste Abstand (A1) und der zweite Abstand (A2).

4. Greifer nach einem der Ansprüche 1 bis 3, **dadurch gekennzeichnet, dass** die Kraftmessvorrichtung (24) zwischen einer dem ersten Schenkel (22.1) gegenüberliegenden Stirnseite (28) des zweiten Schenkels (22.2) und einer Abstützfläche (29) des Fingergrundkörpers (18) angeordnet ist.

5. Greifer nach einem der Ansprüche 1 bis 4, **dadurch gekennzeichnet, dass** der zweite Schenkel (22.2) eine erste Nut (31) mit zwei gegenüberliegenden Schenkelnutwänden (31.1, 31.2) aufweist und der Fingergrundkörper (18) eine zweite Nut (32) mit zwei gegenüberliegenden Grundkörpernutwänden (32.1, 32.2) aufweist, wobei eine der Schenkelnutwände (31.1, 31.2) unter Bildung eines Aufnahmeraumes (33) einer der Grundkörpernutwände (32.1, 32.2) gegenüberliegt angeordnet ist und die Kraftmessvorrichtung (24) in dem Aufnahmeraum (33) angeordnet ist.

6. Greifer nach einem der Ansprüche 2 bis 5, **dadurch gekennzeichnet, dass** die Kraftmessvorrichtung (24) in Kraftmessrichtung zwischen den beiden Koppelstangen (27.1, 27.2) angeordnet ist.

7. Greifer nach einem der Ansprüche 1 bis 6, **dadurch gekennzeichnet, dass** die Kraftmessvorrichtung (24) zur Messung von Schubkräften ausgebildet ist.

8. Greifer nach einem der Ansprüche 2 bis 7, **dadurch gekennzeichnet, dass** die beiden Koppelstangen (27.1, 27.2) zwischen der Kraftmessvorrichtung (24) und der ersten Greiffläche (25.1) und/oder der zweiten Greiffläche (25.2) angeordnet sind.

## Claims

1. Gripper, having a gripper main body (12), at least a first gripper finger (16.1) and at least a second gripper finger (16.2, 16.3), and also a gear mechanism (21) which is designed to mount the at least one first gripper finger (16.1) and the at least one second gripper finger (16.2) on the gripper main body (12) such that they can be adjusted relative to one another,
wherein at least one of the first and the second gripper finger (16.1, 16.2, 16.3) has:
- a finger main body (18) arranged on the gripper main body (12),
- a gripping element (22) with a first limb (22.1) and a second limb (22.2) which is arranged oriented at a fixed angle in relation to the first limb (22.1) and rigidly connected to the first limb (22.1),
- at least one articulation guide (23) which is designed to mount the second limb (22.2) on the finger main body (18) in an adjustable manner,
- a force measuring device (24) which is designed to measure both forces in a first direction and forces in an opposite second direction,
- wherein the first limb (22.1) has a first gripping area (25.1) on a first surface and a second gripping area (25.2) on a second surface which is situated opposite the first surface, and
- the force measuring device (24) is arranged between the second limb (22.2) and the finger main body (18) and is designed to measure a gripping force which acts on the first gripping area (25.1) of the first limb (22.1) and a gripping force which acts on the second gripping area (25.2) of the first limb (22.1), **characterized in that** the articulation guide (23) has a rotary bearing (23b) which mounts the gripping element (22) in a pivotable manner on the finger main body (18) and the force measuring device (24) is arranged between the finger main body (18) and the second limb (22.2), which is mounted on the finger main body (18) in a pivotable manner by the rotary bearing (23b), in order to measure a gripping force which acts on the first limb (22.1) and may be a tensile force or a compressive force.

2. Gripper according to Claim 1, **characterized in that** the articulation guide (23) is a parallelogram guide.

3. Gripper according to Claim 2, **characterized in that** the parallelogram guide comprises four rotary joints (26.1, 26.2, 26.3, 26.4), two of which rotary joints (26.1, 26.2), which are arranged at a first distance (A1) from one another, are formed on the second limb (22.2) and two of which rotary joints (26.3, 26.4), which are arranged at a second distance (A2), which is the same length as the first distance (A1), from one another, are formed on the finger main body (18), and two coupling rods (27.1, 27.2) are provided, each coupling rod (27.1, 27.2) of which connects one of the rotary joints (26.1, 26.2) of the second limb (22.2) to one of the rotary joints (26.3, 26.4) of the finger main body (18), wherein in particular the coupling rods (27.1, 27.2) each exhibit identical effective lengths (L1, L2) which are smaller than the first distance (A1) and the second distance (A2) .

4. Gripper according to one of Claims 1 to 3, **characterized in that** the force measuring device (24) is arranged between an end side (28), which is situated opposite the first limb (22.1), of the second limb (22.2) and a supporting area (29) of the finger main body (18).

5. Gripper according to one of Claims 1 to 4, **characterized in that** the second limb (22.2) has a first groove (31) with two opposite limb groove walls (31.1, 31.2) and the finger main body (18) has a second groove (32) with two opposite main body groove walls (32.1, 32.2), wherein one of the limb groove walls (31.1, 31.2) is arranged opposite one of the main body groove walls (32.1, 32.2) so as to form a receiving space (33) and the force measuring device (24) is arranged in the receiving space (33).

6. Gripper according to one of Claims 2 to 5, **characterized in that** the force measuring device (24) is arranged between the two coupling rods (27.1, 27.2) in the force measuring direction.

7. Gripper according to one of Claims 1 to 6, **characterized in that** the force measuring device (24) is designed for measuring shear forces.

8. Gripper according to one of Claims 2 to 7, **characterized in that** the two coupling rods (27.1, 27.2) are arranged between the force measuring device (24) and the first gripping area (25.1) and/or the second gripping area (25.2).

## Revendications

1. Dispositif de préhension, présentant un corps de base de dispositif de préhension (12), au moins un premier doigt de dispositif de préhension (16.1) et au moins un deuxième doigt de dispositif de préhension (16.2, 16.3), ainsi qu'une transmission (21) qui est réalisée pour supporter l'au moins un premier doigt de dispositif de préhension (16.1) et l'au moins un deuxième doigt de dispositif de préhension (16.2) de manière déplaçable l'un par rapport à l'autre sur le corps de base de dispositif de préhension (12),
au moins l'un des premiers et deuxièmes doigts de dispositif de préhension (16.1, 16.2, 16.3) présentant :
- un corps de base de doigt (18) disposé sur le corps de base de dispositif de préhension (12),
- un organe de préhension (22) comprenant une première branche (22.1) et une deuxième branche (22.2) qui est disposée de manière orientée suivant un angle fixe par rapport à la première branche (22.1) et est reliée rigidement à la première branche (22.1),
- au moins un guide d'articulation (23) qui est réalisé pour supporter la deuxième branche (22.2) sur le corps de base de doigt (18) de manière déplaçable,
- un dispositif de mesure de force (24) qui est réalisé pour mesurer à la fois des forces dans un premier sens, et des forces dans un deuxième sens opposé,
- la première branche (22.1) présentant, sur une première surface, une première face de préhension (25.1) et, sur une deuxième surface opposée à la première surface, une deuxième face de préhension (25.2), et
le dispositif de mesure de force (24) étant disposé entre la deuxième branche (22.2) et le corps de base de doigt (18) et étant conçu pour mesurer une force de préhension agissant sur la première face de préhension (25.1) de la première branche (22.1) et une force de préhension agissant sur la deuxième face de préhension (25.2) de la première branche (22.1), **caractérisé en ce que**
le guide d'articulation (23) présente un palier de rotation (23b), lequel supporte l'organe de préhension (22) de manière pivotante sur le corps de base de doigt (18) et le dispositif de mesure de force (24) est disposé entre le corps de base de doigt (18) et la deuxième branche (22.2), qui est supportée de manière pivotante sur le corps de base de doigt (18) par le biais du palier de rotation (23b), afin de mesurer une force de préhension agissant sur la première branche (22.1), laquelle force de préhension peut être une force de traction ou une force de compression.

2. Dispositif de préhension selon la revendication 1, **caractérisé en ce que** le guide d'articulation (23) est un guide à parallélogramme.

3. Dispositif de préhension selon la revendication 2, **caractérisé en ce que** le guide à parallélogramme comporte quatre articulations rotatives (26.1, 26.2, 26.3, 26.4), parmi lesquelles deux articulations rotatives (26.1, 26.2), qui sont disposées à une première distance (A1) l'une de l'autre, sont réalisées sur la deuxième branche (22.2) et deux articulations rotatives (26.3, 26.4), qui sont disposées à une deuxième distance (A2) l'une de l'autre, laquelle est de même longueur que la première distance (A1), sont réalisées sur le corps de base de doigt (18), et deux tiges d'accouplement (27.1, 27.2) sont prévues, parmi lesquelles chaque tige d'accouplement (27.1, 27.2) relie respectivement l'une des articulations rotatives (26.1, 26.2) de la deuxième branche (22.2) à l'une des articulations rotatives (26.3, 26.4) du corps de base de doigt (18), en particulier les tiges d'accouplement (27.1, 27.2) présentant des longueurs (L1, L2) effectives respectivement de même longueur, qui sont inférieures à la première distance (A1) et à la deuxième distance (A2).

4. Dispositif de préhension selon l'une des revendications 1 à 3, **caractérisé en ce que** le dispositif de mesure de force (24) est disposé entre un côté frontal (28), opposé à la première branche (22.1), de la deuxième branche (22.2) et une face d'appui (29) du corps de base de doigt (18).

5. Dispositif de préhension selon l'une des revendications 1 à 4, **caractérisé en ce que** la deuxième branche (22.2) présente une première rainure (31) comprenant deux parois de rainure de branche (31.1, 31.2) en regard et le corps de base de doigt (18) présente une deuxième rainure (32) comprenant deux parois de rainure de corps de base (32.1, 32.2) en regard, l'une des parois de rainure de branche (31.1, 31.2) étant disposée en regard de l'une des parois de rainure de corps de base (32.1, 32.2) en formant un espace de réception (33) et le dispositif de mesure de force (24) étant disposé dans l'espace de réception (33).

6. Dispositif de préhension selon l'une des revendications 2 à 5, **caractérisé en ce que** le dispositif de mesure de force (24) est disposé entre les deux tiges d'accouplement (27.1, 27.2) dans le sens de mesure de force.

7. Dispositif de préhension selon l'une des revendications 1 à 6, **caractérisé en ce que** le dispositif de mesure de force (24) est réalisé pour la mesure de forces de cisaillement.

8. Dispositif de préhension selon l'une des revendications 2 à 7, **caractérisé en ce que** les deux tiges d'accouplement (27.1, 27.2) sont disposées entre le dispositif de mesure de force (24) et la première face de préhension (25.1) et/ou la deuxième face de préhension (25.2) .
